# EUROPEAN PATENT SPECIFICATION

(11) **EP 2 126 847 B1**
(45) Date of publication and mention of the grant of the patent: **28.04.2010**
(21) Application number: 08701088.0
(22) Date of filing: 09.01.2008
(51) Int. Cl.: G06T 15/10, G06T 17/50

(54) **DATA PROCESSING METHOD&DEVICE**
DATENVERARBEITUNGSVERFAHREN UND -VORRICHTUNG
PROCÉDÉ ET DISPOSITIF DE TRAITEMENT DE DONNÉES

(30) Priority: 10.01.2007 US 879605 P
(43) Date of publication of application: 02.12.2009
(73) Proprietor: TomTom International B.V., 1017 CT Amsterdam (NL)
(72) Inventor: SERBANESCU, Alexandru, 1186 WV Amstelveen (NL)
(86) International application number: PCT/EP2008/000184
(87) International publication number: WO 2008/083981

(56) References cited:
- US-A- 4 970 682
- US-A- 5 945 977
- US-A- 6 032 219
- US-A1- 2005 270 299
- DIVYA M ET AL: "A J2ME based digital map system" CONSUMER ELECTRONICS, 2004 IEEE INTERNATIONAL SYMPOSIUM ON READING, UK SEPT. 1-3, 2004, PISCATAWAY, NJ, USA,IEEE, 1 September 2004 (2004-09-01), pages 583-586, XP010755939 ISBN: 0-7803-8527-6

## Description

### Field of the Invention

This invention relates to data processing methods and devices, particularly but not exclusively for pixels of a field of view. One illustrative embodiment of the present invention relates to a portable navigation device (PND) that is configured to dynamically display a field of view that comprises a portion of a digital map.

### Background to the Invention

A variety of different portable navigation devices have previously been proposed (see www.garmin.com for various examples). These devices each include a display which is controllable by a processor to display a portion (hereafter the "field of view") of a digital map stored in the device. In one illustrative example such devices can be used by hikers to assist them with navigation whilst travelling from one point to another. Some such devices have integral satellite navigation capabilities (such as GPS navigation capabilities), the like of which are well known in the art, which enable the device to accurately determine its current position and display to the user a field of view in which the device, and hence the user, is currently located. Other devices merely provide a user with a field of view that includes a user-selected "current" position, and yet other devices provide both functions. To provide a field of view for display, devices of this type typically include a processor that is configured to retrieve digital map data from a store within the device, and then render an image from that retrieved data.

Typically the image of the field of view displayed by such devices includes both geographical and topographical information. By this we mean that it is usual for the field of view to include two-dimensional information (such as the position and shape of natural and man-made geographic features, for example: rivers, roads, etc.) as well as a representation of the topography (i.e. relief or contours) of the displayed field of view. Some devices convey topographical information by shading the displayed field of view, and others convey topographical information by applying contours (lines joining points of equal height) or isoclines (lines of equal slope) to the two-dimensional geographical information.

Whilst such functionality is particularly useful when embodied as software executed by the processor of a personal navigation device, it can also be embodied as software running on a variety of other electronic devices - including, without limitation, mobile telephones, portable digital assistants, portable computers and desktop computers.

Although topographical information can be represented in a variety of different ways, it remains the case that in order to represent the height (for example relative to sea level) of every pixel for the field of view that is to be displayed it is necessary to retrieve height information from the digital map stored in the device and then use this information to render an image for display. It is generally the case that rendering images of fields of view is computationally intensive, and as a result it is important to render such data in an efficient manner if such devices are to operate efficiently. This is particularly the case when functionality of this type is embodied in a hand-holdable device where the available processing power and memory capacity is necessarily limited by the fact that the device must be relatively compact so that it can readily be carried by the user.

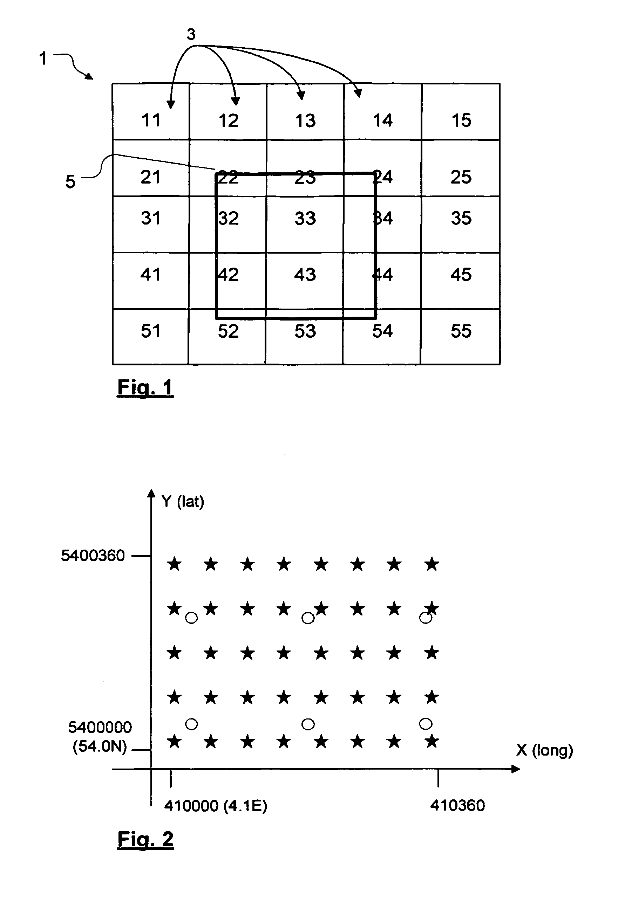

One illustrative way of storing map data is depicted schematically in Fig. 1. In this example, map data - in particular height data (by which we mean height information for specific geographic locations) - is stored in a grid 1 of data patches 3.

In this example each data patch is a matrix of data points, for example a matrix of height values taken at certain locations (x, y) on the surface of the Earth (we can consider for simplicity a uniformly distributed grid of measurements taken every 3" latitude or longitude). The data patches are adjacent and in this instance have been labelled with their matrix indices (i.e. data patch 11 is the first patch in the first row, data patch 21 is the first patch in the second row, and so on). Projected on the grid 1 is a rectangular window 5 that represents a portion of the map that is to be displayed on the display screen of a PND at any one time (i.e. in the context of this application, "the field of view"). In this instance the window 5 is aligned with the grid, but as will later be described the window can be rotated with respect to the grid (either automatically as the position of the device changes or in response to a user-inputted instruction to rotate the displayed field of view).

At low map magnification levels (at which magnification the window covers a relatively large proportion of the underlying grid) the density of the pixels of the field of view 5 (which correspond to the pixels of the display) may be equal to or larger than the density of data points. However, at higher map magnifications typical of the device in use, the density of the pixels will typically be far smaller than the density of data points on the corresponding map.

Fig. 2 is a schematic representation of height data points for a higher map magnification. In this illustrative example height measurement points are indicated by stars, and pixels of a field of view that have been projected onto the map of height data points are indicated by circles. Fig. 2 shows a small area around the coordinates 54.0N, 4.1E. The stars (height measurements) are distributed roughly every 3". Since the area depicted is around the latitude 54.0N, each horizontal step is roughly 56m and each vertical step is roughly 90m (it being the case that the circumvent of circles parallel to the Equator decreases as one approaches the poles).

In order to render the height data for each pixel of the screen, the processor of the PND implements a known algorithm to compute a shading coefficient for each pixel. The shading coefficient for each pixel is derived from the values of the height data points in the vicinity of the projection of the corresponding pixel on the map, and these values are read by the processor from height data files stored in the PND. This process is repeated each time a new field of view is rendered.

The speed at which data can be read from a storage device is often the most significant factor affecting the speed of this rendering process. One reason for this is that individual data items that have to be read from the storage device of the PND are typically not stored adjacent one another, but spread throughout the storage device.

Aside from the rendering speed, other factors of importance are the amount of memory used by the process and the quality of the rendered image. These three criteria are to some dependent on one another since a relaxation of the restrictions imposed by any one factor may improve the performance of another one. For example, increasing the image resolution will likely decrease processing speed and increase the amount of memory used, whereas - conversely - a decrease in image resolution will likely increase the speed of the rendering process and decrease the amount of memory used.

One way to deal with the issue of storing a matrix of data items for efficient retrieval would be to concatenate together and store the data elements of a given data patch, either by row or by column. In such an arrangement data for a given row, for example, of a field of view could be readily retrieved merely by reading data from a start position of the concatenated data (which start position corresponds to the first pixel of the pixel row being processed) to an end position of the concatenated data (which end position corresponds to a last pixel of the pixel row being processed). Such an arrangement would be advantageous in that it would not be necessary to read all of the data from the concatenated data, merely the data relevant for the row being processed.

If the field of view should be, as indicated in Fig. 1, north-south aligned with the data points so that the projection of the screen pixel rows is parallel with the rows of height data points, then the abovementioned process could be implemented and it would be relatively easy to load and process, in turn, all the needed rows or columns of a given patch, and then pass to the next patch. For example one could scroll through pixels of the first row of the field of view from left to right till the projection on the map reaches a new patch, process this data (which includes loading the corresponding height data from the line number of the corresponding patch, and computing the shading percentage), and then move to the next row of the field of view and repeat the process. When the last row of a given patch is reached the process can then be restarted from the pixel of the first row that is adjacent the pixel of the first row where processing previously terminated, and this process can be repeated until all of the pixels of the field of view to be displayed have been processed.

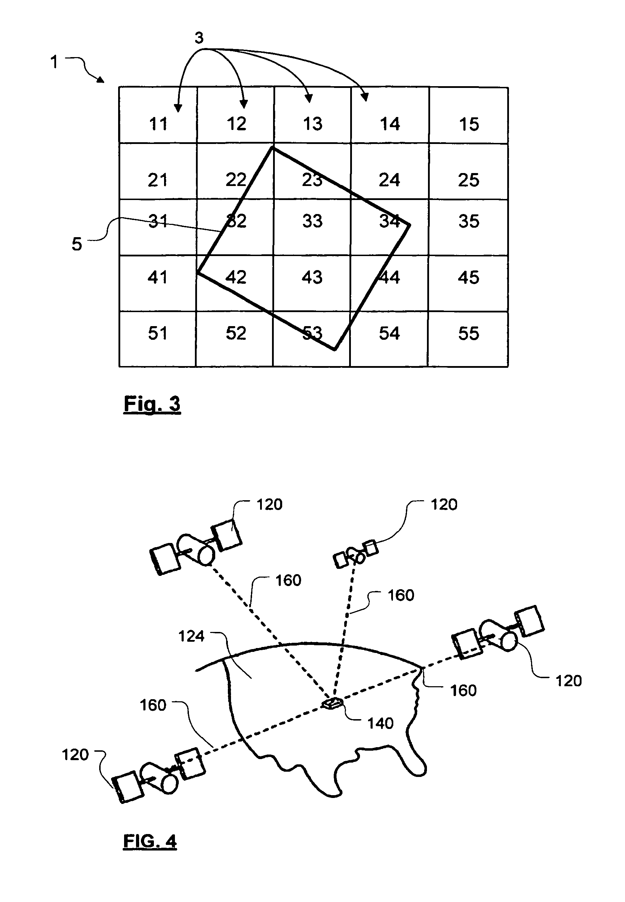

If however the field of view should be rotated with respect to the map of data points, as shown in Fig. 3 (see also US 4,970,682), then such a process would no longer function correctly. For example, if we consider how to render the first row of the field of view depicted in Fig. 3, it is immediately apparent in the first instance that height data points from different patches will need to be retrieved, and in the second instance that adjacent pixels of the row may belong to different rows of the same patch or even to different rows of different patches. In other words, to render the rows of the field of view it would now be necessary to read non-adjacent data for new pixels whereas in the example previously described (where the field of view is north-south aligned with the map) several pixels in a given row of the display corresponded to several height values in the same data row.

If one were then to process the second row of the field of view, it would most probably be necessary to reload previously loaded patches and maybe also to reload data from previously loaded rows of the map. Reloading data patches and data items would slow the rendering process, and these delays would be further compounded by the fact that that each data patch has a header that would also have to be loaded each time the rendering process switched from one patch to another.

Various attempts have been made to address such problems. In one previously proposed arrangement, dynamic rendering of height data (by which we mean, re-rendering displayed topographical information each time the field of view changes) was avoided entirely and pre-processed height data was instead employed, not only in the context of an image but also in the context of vector data. For example some pedestrian PND devices offered for sale by Garmin International Inc. employ pre-processed isoclines for some well defined geographic areas where this functionality is supported.

A principal difference between dynamic rendering and pre-processing is that In the case of dynamic rendering such isoclines (being merely one example of topographical information) are computed each time the current view is rendered. One advantage of dynamic rendering is that isoclines can be more accurately represented at any map zoom level. Another advantage of dynamic rendering is that the provision of topographical information is not restricted only to those geographic areas for which isoclines have previously been calculated, but can instead be provided for any region where height information is available. Yet another advantage is that as the isoclines (for example) are dynamically rendered as required, it is no longer necessary to store pre-processed isocline information.

In another arrangement, a dynamic rending process was proposed in which the available height data was stripped to a small size raster that contained a subset of the data covering the field of view. The general concept of this approach was that by reducing the amount of data to be processed, dynamic rendering could be provided without adversely affecting PND performance. As an illustration, if we imagine a situation where the actual resolution of height data as per the digital map is about one measurement every 3" latitude and longitude, then a more easily processed subset can be created by considering only those height measurements that occur every 300", for example. In this way it is possible to cover an area that is large enough to contain rotations of the current field of view by means of a reasonably small subset of height data points that can more easily be processed.

The principal drawback of such an approach is that by using only a subset of the available data, the initial resolution of the original data is lost. In other words, using a subset of the data inevitably means that only generalised information can be displayed, and as a result it is likely that this generalised information will not correctly match (at least to the same extent as the actual available data) the real situation on the ground. This loss in precision is manifested not only as a loss of detailed height information, but also as a loss in topographical shape of the geographic features being represented.

The present invention, at least in one embodiment thereof, seeks to address such problems. In particular one aspect of the present invention seeks to provide an arrangement whereby dynamic rendering can be provided (on whatever system) without adversely affecting the quality of the generated image, without unduly slowing the rendering process, and without having to commit a relatively large amount of fast memory to the rendering process.

### Summary of the Invention

In pursuit of the foregoing, one presently preferred embodiment of the present invention provides a data processing method for pixels of a field of view, wherein the field of view comprises a portion of a digital map that is to be displayed and includes a plurality of pixels, the digital map comprises a plurality of data patches which each include at least one data point, and the field of view includes a plurality of said data patches, the method being characterised by: identifying, for a said pixel, a data patch in which said pixel lies; locating a border of said data patch that lies within said field of view; processing all pixels of said field of view that lie within said border to provide a processed data patch; locating, for each of any unprocessed data patches within the field of view that are adjacent a border of a processed data patch, a border of the unprocessed data patch that lies within said field of view; processing, for each unprocessed data patch, all unprocessed pixels that lie within the border of said unprocessed data patch to thereby provide a processed data patch; and repeating steps and until all data patches within said field of view have been processed.

Another presently preferred embodiment of the present invention relates to a data processing device configured to process pixels of a field of view, wherein the field of view comprises a portion of a digital map that is to be displayed and includes a plurality of pixels, the digital map comprises a plurality of data patches which each include at least one data point, and the field of view includes a plurality of said data patches, the device comprising: storage for said digital map; and a processor for accessing the digital map stored in said storage; characterised in that the device further comprises: a data processing module controllable by said processor to:
(i) identify for a said pixel, a data patch in which said pixel lies;
(ii) locate a border of said data patch that lies within said field of view;
(iii) process all pixels of said field of view that lie within said border to provide a processed data patch;
(iv) locate, for each of any unprocessed data patches within the field of view that are adjacent a border of a processed data patch, a border of the unprocessed data patch that lies within said field of view;
(v) process, for each unprocessed data patch, all unprocessed pixels that lie within the border of said unprocessed data patch to thereby provide a processed data patch; and
(viii) repeat steps (iv) and (v) until all data patches within said field of view have been processed.

Another presently preferred embodiment of the present invention relates to computer software comprising one or more software modules operable, when executed in an execution environment, to cause a processor to:
(i) identify, for a pixel of a field of view that comprises a portion of a digital map that is to be displayed, a data patch in which said pixel lies, wherein the digital map comprises a plurality of data patches which each include at least one data point and said field of view comprises a plurality of said pixels;
(ii) locate a border of said data patch that lies within said field of view;
(iii) process all pixels of said field of view that lie within said border to provide a processed data patch;
(iv) locate, for each of any unprocessed data patches within the field of view that are adjacent a border of a processed data patch, a border of the unprocessed data patch that lies within said field of view;
(v) process, for each unprocessed data patch, all unprocessed pixels that lie within the border of said unprocessed data patch to thereby provide a processed data patch; and
(viii) repeat steps (iv) and (v) until all data patches within said field of view have been processed.

One advantage of an arrangement implementing the teachings of the invention is that use of substantially all of the available height data avoids the loss of image quality that would be inherent in a system that employs values interpolated from a relatively small size data subset. Another advantage of an arrangement embodying the teachings of the invention is that reloading of the same data (be it patch headers or data items themselves) can at least be reduced without increasing the memory in use - in particular without loading all data that might potentially be needed into fast memory (a solution which would in practice be very likely impossible to implement effectively).

In general terms, a preferred embodiment of the invention may be summarised as a method comprising the steps of: (i) determining the identity of a data patch in which a projection of a pixel lies, (ii) locating a border for that data patch, (iii) processing pixels within said data patch to provide a processed data patch, (iv) locating a border for each of any unprocessed data patches adjoining said processed data patch, (v) processing pixels within each said unprocessed data patch, and repeating steps (iv) and (v) until all data patches of a field of view have been processed.

Advantages of these embodiments are set out hereafter, and further details and features of each of these embodiments are defined in the accompanying dependent claims and elsewhere in the following detailed description.

### Brief Description of the Drawings

Various aspects of the teachings of the present invention, and arrangements embodying those teachings, will hereafter be described by way of illustrative example with reference to the accompanying drawings, in which:
Fig. 1 is a schematic representation of a digital map and an overlaid window aligned therewith;
Fig. 2 is a schematic representation of height data points for a higher map magnification;
Fig. 3 is a schematic representation of a digital map and overlaid window, wherein the window has been rotated with respect to the map;
Fig. 4 is a schematic illustration of a Global Positioning System (GPS);
Fig. 5 is a schematic illustration of electronic components arranged to provide a navigation device;
Fig. 6 is a schematic illustration of the manner in which a navigation device may implement communications over a communication channel;
Figs. 7A and 7B are illustrative perspective views of a navigation device;
Fig. 8 is a schematic representation of software executable by the device of Fig. 5;
Fig. 9A is a schematic representation of part of a field of view;
Figs. 9B to 9F are schematic representations of the digital map and overlaid window depicted in Fig. 3 at different points in the data processing method; and
Fig. 10 is a flow diagram illustrating steps of one method by which the teachings of the present invention may be implemented.

### Detailed Description of Preferred Embodiments

A preferred embodiment of the present invention will now be described in the context of software executable by a personal navigation device that includes GPS position finding capabilities and has, in this instance, both route planning and route guidance functionality. It should be remembered, however, that this description is merely illustrative of the teachings of the present invention and hence that the present invention should not be interpreted as being limited to a personal navigation device that is provided with route planning and route guidance functionality.

It should also be remembered that the teachings of the present invention are applicable to any type of computing device (e.g. a portable radio telephone, a personal digital assistant, or indeed a desktop or networked computing resource) that is configured to render fields of view, in particular those that include topographical information. Whilst the embodiment that is hereafter described has particular utility as a hand-held device for hikers, cyclists or persons on horseback, for example, it will immediately be appreciated that there is no reason why the teachings of the present invention could not also or alternatively be implemented in a navigation device for vehicles (either as an integral part of the vehicle's electronic systems, or as a stand-alone device mountable in a vehicle) as the display of topographical information would provide the user with a more realistic view of their surroundings that may aid the navigation process.

Fig. 4 illustrates an example view of Global Positioning System (GPS), usable by navigation devices. Such systems are known and are used for a variety of purposes. In general, GPS is a satellite-radio based navigation system capable of determining continuous position, velocity, time, and in some instances direction information for an unlimited number of users. Formerly known as NAVSTAR, the GPS incorporates a plurality of satellites which orbit the earth in extremely precise orbits. Based on these precise orbits, GPS satellites can relay their location to any number of receiving units.

The GPS system is implemented when a device, specially equipped to receive GPS data, begins scanning radio frequencies for GPS satellite signals. Upon receiving a radio signal from a GPS satellite, the device determines the precise location of that satellite via one of a plurality of different conventional methods. The device will continue scanning, in most instances, for signals until it has acquired at least three different satellite signals (noting that position is not normally, but can be determined, with only two signals using other triangulation techniques). Implementing geometric triangulation, the receiver utilizes the three known positions to determine its own two-dimensional position relative to the satellites. This can be done in a known manner. Additionally, acquiring a fourth satellite signal will allow the receiving device to calculate its three dimensional position by the same geometrical calculation in a known manner. The position and velocity data can be updated in real time on a continuous basis by an unlimited number of users.

As shown in Figure 4, the GPS system is denoted generally by reference numeral 140. A plurality of satellites 120 are in orbit about the earth 124. The orbit of each satellite 120 is not necessarily synchronous with the orbits of other satellites 120 and, in fact, is likely asynchronous. A GPS receiver 140 is shown receiving spread spectrum GPS satellite signals 160 from the various satellites 120.

The spread spectrum signals 160, continuously transmitted from each satellite 120, utilize a highly accurate frequency standard accomplished with an extremely accurate atomic clock. Each satellite 120, as part of its data signal transmission 160, transmits a data stream indicative of that particular satellite 120. It is appreciated by those skilled in the relevant art that the GPS receiver device 140 generally acquires spread spectrum GPS satellite signals 160 from at least three satellites 120 for the GPS receiver device 140 to calculate its two-dimensional position by triangulation. Acquisition of an additional signal, resulting in signals 160 from a total of four satellites 120, permits the GPS receiver device 140 to calculate its three-dimensional position in a known manner.

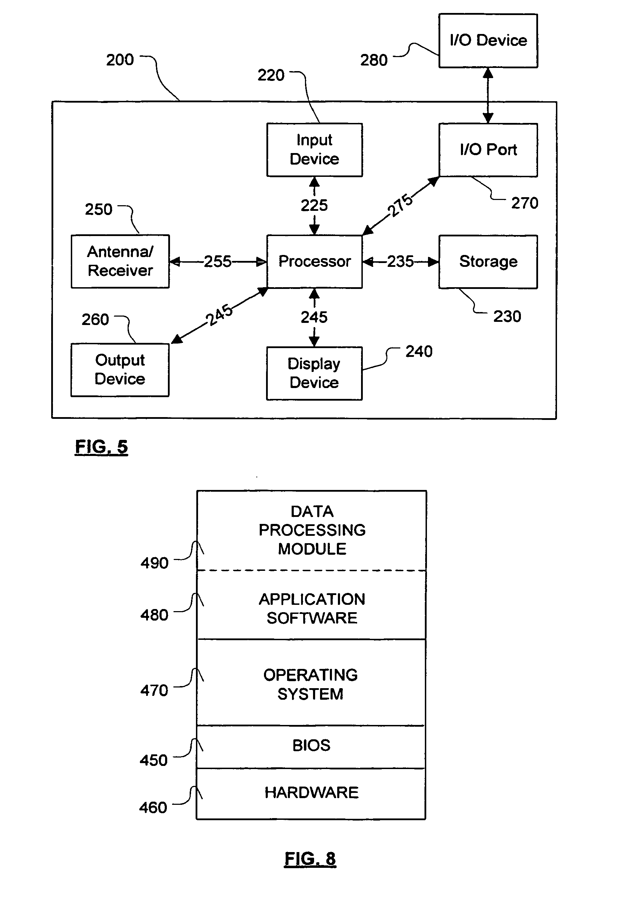

Fig. 5 is an illustrative representation of electronic components of a navigation device 200 according to a preferred embodiment of the present invention, in block component format. It should be noted that the block diagram of the navigation device 200 is not inclusive of all components of the navigation device, but is only representative of many example components.

The navigation device 200 is located within a housing (not shown). The housing includes a processor 210 connected to an input device 220 and a display screen 240. The input device 220 can include a keyboard device, voice input device, touch panel and/or any other known input device utilised to input information; and the display screen 240 can include any type of display screen such as an LCD display, for example. In a particularly preferred arrangement the input device 220 and display screen 240 are integrated into an integrated input and display device, including a touchpad or touchscreen input so that a user need only touch a portion of the display screen 240 to select one of a plurality of display choices or to activate one of a plurality of virtual buttons.

The navigation device may include an output device 260, for example an audible output device (e.g. a loudspeaker). As output device 260 can produce audible information for a user of the navigation device 200, it is should equally be understood that input device 240 can include a microphone and software for receiving input voice commands as well.

In the navigation device 200, processor 210 is operatively connected to and set to receive input information from input device 220 via a connection 225, and operatively connected to at least one of display screen 240 and output device 260, via output connections 245, to output information thereto. Further, the processor 210 is operatively connected to storage 230 (which may comprise one or more RAM chips and/or mechanical data storage such as a hard disk drive or solid state drive) via connection 235 and is further adapted to receive/send information from/to input/output (I/O) ports 270 via connection 275, wherein the I/O port 270 is connectible to an I/O device 280 external to the navigation device 200. The external I/O device 280 may include, but is not limited to an external listening device such as an earpiece for example. The connection to I/O device 280 can further be a wired or wireless connection to any other external device such as a car stereo unit for hands-free operation and/or for voice activated operation for example, for connection to an ear piece or head phones, and/or for connection to a mobile phone for example, wherein the mobile phone connection may be used to establish a data connection between the navigation device 200 and the internet or any other network for example, and/or to establish a connection to a server via the internet or some other network for example. In a particularly preferred arrangement the I/O port may comprise a USB (universal serial bus) port to enable the device to be coupled to an external computing device (such as a desktop computer) for data exchange therewith.

Fig. 5 further illustrates an operative connection between the processor 210 and an antenna/receiver 250 via connection 255, wherein the antenna/receiver 250 can be a GPS antenna/receiver for example. It will be understood that the antenna and receiver designated by reference numeral 250 are combined schematically for illustration, but that the antenna and receiver may be separately located components, and that the antenna may be a GPS patch antenna or helical antenna for example.

Further, it will be understood by one of ordinary skill in the art that the electronic components shown in Fig. 5 are powered by power sources (not shown) in a conventional manner. As will be understood by one of ordinary skill in the art, different configurations of the components shown in Fig. 5 are considered to be within the scope of the present application. For example, the components shown in Fig. 5 may be in communication with one another via wired and/or wireless connections and the like. Thus, the scope of the navigation device 200 of the present application includes a portable or handheld navigation device 200.

In addition, the portable or handheld navigation device 200 of Fig. 5 can be connected or "docked" in a known manner to a vehicle such as a bicycle, a motorbike, a car or a boat for example. Such a navigation device 200 is then removable from the docked location for portable or handheld navigation use.

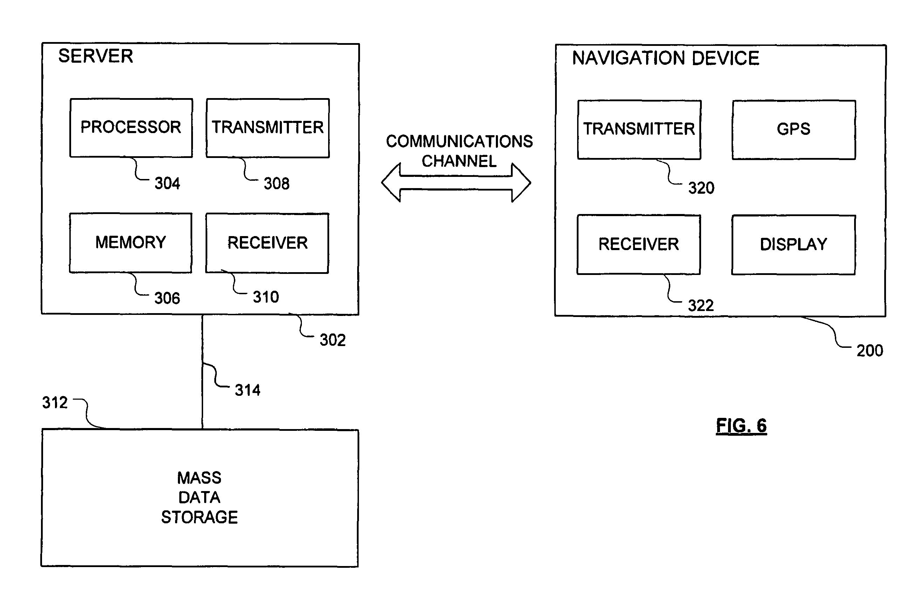

Referring now to Fig. 6, the navigation device 200 may establish a "mobile" or telecommunications network connection with a server 302 via a mobile device (not shown) (such as a mobile phone, PDA, and/or any device with mobile phone technology) or any other means of establishing a digital connection (such as a digital connection via known Bluetooth technology for example). Thereafter, through its network service provider, the mobile device can establish a network connection (through the internet for example) with a server 302. As such, a "mobile" network connection is established between the navigation device 200 (which can be, and often times is mobile as it travels alone and/or in a vehicle) and the server 302 to provide a "real-time" or at least very "up to date" gateway for information.

The establishing of the network connection between the mobile device (via a service provider) and another device such as the server 302, using an internet (such as the World Wide Web) for example, can be done in a known manner. This can include use of TCP/IP layered protocol for example. The mobile device can utilize any number of communication standards such as CDMA, GSM, WAN, etc.

As such, an internet connection may be utilised which is achieved via data connection, via a mobile phone or mobile phone technology within the navigation device 200 for example. For this connection, an internet connection between the server 302 and the navigation device 200 is established. This can be done, for example, through a mobile phone or other mobile device and a GPRS (General Packet Radio Service)-connection (GPRS connection is a high-speed data connection for mobile devices provided by telecom operators; GPRS is a method to connect to the internet).

The navigation device 200 can further complete a data connection with the mobile device, and eventually with the internet and server 302, via existing Bluetooth technology for example, in a known manner, wherein the data protocol can utilize any number of standards, such as the GSRM, the Data Protocol Standard for the GSM standard, for example.

The navigation device 200 may include its own mobile phone technology within the navigation device 200 itself (including an antenna for example, or optionally using the internal antenna of the navigation device 200). The mobile phone technology within the navigation device 200 can include internal components as specified above, and/or can include an insertable card (e.g. Subscriber identity Module or SIM card), complete with necessary mobile phone technology and/or an antenna for example. As such, mobile phone technology within the navigation device 200 can similarly establish a network connection between the navigation device 200 and the server 302, via the internet for example, in a manner similar to that of any mobile device.

For GRPS phone settings, a Bluetooth enabled navigation device may be used to correctly work with the ever changing spectrum of mobile phone models, manufacturers, etc., model/manufacturer specific settings may be stored on the navigation device 200 for example. The data stored for this information can be updated.

In Fig. 6 the navigation device 200 is depicted as being in communication with the server 302 via a generic communications channel 318 that can be implemented by any of a number of different arrangements. The server 302 and a navigation device 200 can communicate when a connection via communications channel 318 is established between the server 302 and the navigation device 200 (noting that such a connection can be a data connection via mobile device, a direct connection via personal computer via the internet, etc.).

The server 302 includes, in addition to other components which may not be illustrated, a processor 304 operatively connected to a memory 306 and further operatively connected, via a wired or wireless connection 314, to a mass data storage device 312. The processor 304 is further operatively connected to transmitter 308 and receiver 310, to transmit and send information to and from navigation device 200 via communications channel 318. The signals sent and received may include data, communication, and/or other propagated signals. The transmitter 308 and receiver 310 may be selected or designed according to the communications requirement and communication technology used in the communication design for the navigation system 200. Further, it should be noted that the functions of transmitter 308 and receiver 310 may be combined into a signal transceiver.

Server 302 is further connected to (or includes) a mass storage device 312, noting that the mass storage device 312 may be coupled to the server 302 via communication link 314. The mass storage device 312 contains a store of navigation data and map information, and can again be a separate device from the server 302 or can be incorporated into the server 302.

The navigation device 200 is adapted to communicate with the server 302 through communications channel 318, and includes processor, storage, etc. as previously described with regard to Fig. 5, as well as transmitter 320 and receiver 322 to send and receive signals and/or data through the communications channel 318, noting that these devices can further be used to communicate with devices other than server 302. Further, the transmitter 320 and receiver 322 are selected or designed according to communication requirements and communication technology used in the communication design for the navigation device 200 and the functions of the transmitter 320 and receiver 322 may be combined into a single transceiver.

Software stored in server memory 306 provides instructions for the processor 304 and allows the server 302 to provide services to the navigation device 200. One service provided by the server 302 involves processing requests from the navigation device 200 and transmitting navigation data from the mass data storage 312 to the navigation device 200. Another service provided by the server 302 includes processing the navigation data using various algorithms for a desired application and sending the results of these calculations to the navigation device 200.

The communication channel 318 generically represents the propagating medium or path that connects the navigation device 200 and the server 302. Both the server 302 and navigation device 200 include a transmitter for transmitting data through the communication channel and a receiver for receiving data that has been transmitted through the communication channel.

The communication channel 318 is not limited to a particular communication technology. Additionally, the communication channel 318 is not limited to a single communication technology; that is, the channel 318 may include several communication links that use a variety of technology. For example, the communication channel 318 can be adapted to provide a path for electrical, optical, and/or electromagnetic communications, etc. As such, the communication channel 318 includes, but is not limited to, one or a combination of the following: electric circuits, electrical conductors such as wires and coaxial cables, fibre optic cables, converters, radio-frequency (RF) waves, the atmosphere, empty space, etc. Furthermore, the communication channel 318 can include intermediate devices such as routers, repeaters, buffers, transmitters, and receivers, for example.

In one illustrative arrangement, the communication channel 318 includes telephone and computer networks. Furthermore, the communication channel 318 may be capable of accommodating wireless communication such as radio frequency, microwave frequency, infrared communication, etc. Additionally, the communication channel 318 can accommodate satellite communication.

The communication signals transmitted through the communication channel 318 include, but are not limited to, signals as may be required or desired for given communication technology. For example, the signals may be adapted to be used in cellular communication technology such as Time Division Multiple Access (TDMA), Frequency Division Multiple Access (FDMA), Code Division Multiple Access (CDMA), Global System for Mobile Communications (GSM), etc. Both digital and analogue signals can be transmitted through the communication channel 318. These signals may be modulated, encrypted and/or compressed signals as may be desirable for the communication technology.

The server 302 includes a remote server accessible by the navigation device 200 via a wireless channel. The server 302 may include a network server located on a local area network (LAN), wide area network (WAN), virtual private network (VPN), etc.

The server 302 may include a personal computer such as a desktop or laptop computer, and the communication channel 318 may be a cable connected between the personal computer and the navigation device 200. Alternatively, a personal computer may be connected between the navigation device 200 and the server 302 to establish an internet connection between the server 302 and the navigation device 200. Alternatively, a mobile telephone or other handheld device may establish a wireless connection to the internet, for connecting the navigation device 200 to the server 302 via the internet.

The navigation device 200 may be provided with information from the server 302 via information downloads which may be periodically updated automatically or upon a user connecting navigation device 200 to the server 302 and/or may be more dynamic upon a more constant or frequent connection being made between the server 302 and navigation device 200 via a wireless mobile connection device and TCP/IP connection for example. For many dynamic calculations, the processor 304 in the server 302 may be used to handle the bulk of the processing needs, however, processor 210 of navigation device 200 can also handle much processing and calculation, oftentimes independent of a connection to a server 302.

As indicated above in Fig. 5, a navigation device 200 includes a processor 210, an input device 220, and a display screen 240. The input device 220 and display screen 240 are integrated into an integrated input and display device to enable both input of information (via direct input, menu selection, etc.) and display of information through a touch panel screen, for example. Such a screen may be a touch input LCD screen, for example, as is well known to those of ordinary skill in the art. Further, the navigation device 200 can also include any additional input device 220 and/or any additional output device 241, such as audio input/output devices for example.

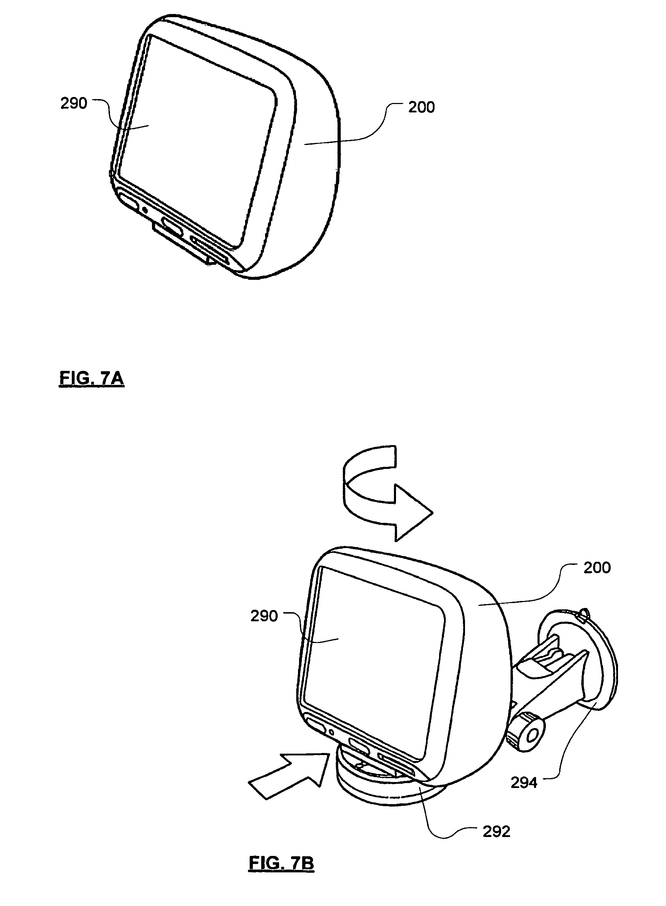

Figs 7A and 7B are perspective views of a navigation device 200. As shown in Fig. 7A, the navigation device 200 may be a unit that includes an integrated input and display device 290 (a touch panel screen for example) and the other components of Fig. 5 (including but not limited to internal GPS receiver 250, microprocessor 210, a power supply, storage systems 230, etc.).

As shown in Fig. 7B, when embodied as a vehicle navigation device, the navigation device 200 may sit on an arm 292, which itself may be secured to a vehicle dashboard/window/etc. using a suction cup 294. This arm 292 is one example of a docking station to which the navigation device 200 can be docked. Another example would be a clamp connectable to the handlebar of a bicycle.

As shown in Fig.7B, the navigation device 200 can be docked or otherwise connected to an arm 292 of the docking station by snap connecting the navigation device 292 to the arm 292 for example. The navigation device 200 may then be rotatable on the arm 292, as shown by the arrow of Fig. 4B. To release the connection between the navigation device 200 and the docking station, a button on the navigation device 200 may be pressed, for example. Other equally suitable arrangements for coupling and decoupling the navigation device to a docking station are well known to persons of ordinary skill in the art.

Referring now to Fig. 8 of the accompanying drawings, the processor 210 and storage 230 cooperate to establish a BIOS (Basic Input/Output System) 450 that functions as an interface between the functional hardware components 460 of the navigation device 200 and the software executed by the device. The processor then loads from storage 210 an operating system 470 which provides an environment in which application software 480 (implementing some or all of the abovedescribed functionality) can run. In accordance with the preferred embodiment of the present invention, part of this functionality comprises a data processing module 490, the function of which will now be described in detail.

In this embodiment the navigation device is configured to generate - in a known manner - a navigation map for display that is representative, in one mode of use, of the local environment in which the navigation device is currently located. If the navigation device is being used to route a hiker, then the displayed navigation map may depict part of a calculated route between a start point and a destination. Alternatively, the device may simply depict the local environment in which the device is currently located (i.e. without a route having been generated). In yet another mode of use, the device may be employed to allow a user to browse maps and in this mode there may be no current location of the device, and instead the user may be prompted to input a start location for map display or map display may automatically commence from a predefined location - such as the user's home location for example.

As aforementioned, the teachings of the present invention enable the navigation device to dynamically render a navigation map that includes topographical information without undue processing delay, loss of image quality and without excessive memory overheads.

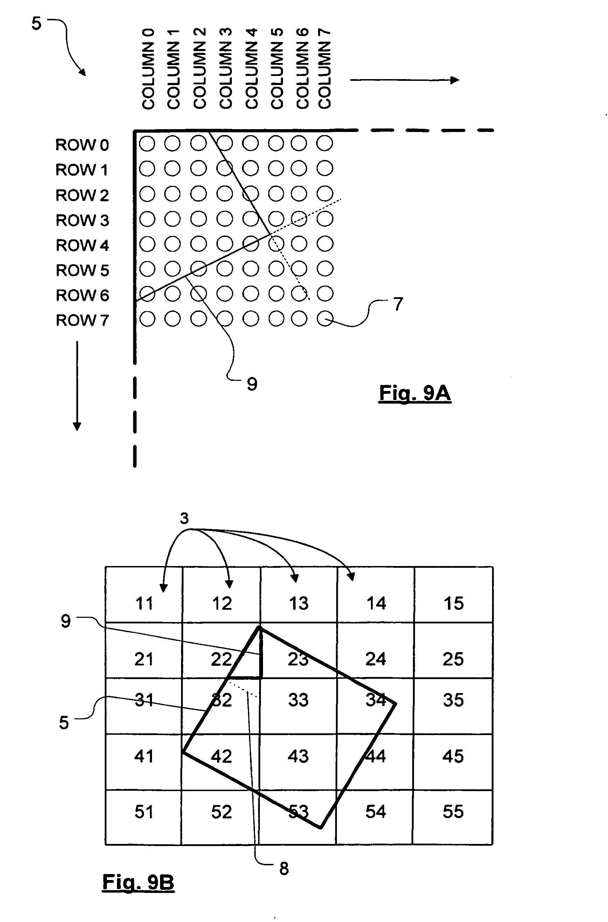

Referring now to Figs. 9B to 9F there are depicted various stages of the data processing method according to a preferred embodiment of the present invention. In this instance it is assumed that height data measurements are stored in one degree by one degree square data patches 3, with each patch including a plurality of data measurements. As shown in Fig. 9A, the field of view 5 (part of which is shown) comprises a plurality of pixels 7 evenly arranged in rows and columns. Also shown in Fig. 9A is an illustrative "border" 9, the significance of which will later be described.

As is well known in the art, to compute topographical information - for example a shading percentage - for each pixel 7 of the field of view 5 it is necessary to retrieve the height measurement values that surround the projection of that pixel on the map 1. In most instances a data buffer consisting of two full data rows will suffice, and for this particular example a suitable data buffer will likely be less than 5K bytes in size. It is likely that not all of this buffer will be needed as there is no need to read a full data row from the storage, as only a segment of the data will most likely be required. A buffer of this magnitude is preferred, however, in order that sufficient memory is provided for extreme cases that might potentially be encountered. As will now be described, processing of the data is accomplished in such a way that reloading of the data is reduced, and preferably avoided altogether.

In general terms, the method functions to group pixels 7 of the field of view 5 by data patch, and then process them. Once the grid coordinates on the map 1 of the height values corresponding to each pixel 7 have been identified, the pixels 7 can then be sorted by row before being processed row by row. As will now be explained, by implementing such an arrangement it is possible to avoid loading lines of any one patch multiple times.

An important element of this method is the "border". In general terms the border of one embodiment comprises, at the end of each iteration of the process (i.e. when all pixels of a given patch have been processed and an image of that patch has been rendered), the column index (i.e. column number) of processed pixels for each row of the field of view. The border will be zero at the start of the rendering process for all rows of the field of view and equal to the last column of the row (again for all rows) when the rendering process has been finished. As will be appreciated, this is an effective way to account for pixels 7 of the field of view 5 that have already been processed. Fig. 9A includes a schematic representation of an illustrative border 9, and to avoid confusion it should be noted that the border 9 shown in Fig. 9A is merely illustrative and is not representative of the borders depicted in Figs. 9B to 9F.

Referring now to Figs. 9A and 9B, the processor invokes the data processing module 490 and determines that the projection of the first pixel in row 0 (pixel index (0,0)) falls within data patch 22 on the digital map 1. The data processing module then scans (in this embodiment) left to right from the first pixel in row 0 (pixel index: (0,0)) until the last pixel falling within data patch 22 is reached (namely pixel index: (0,2) in Fig. 9A). The data processing module sets the border for row 0 (BorderIndex(0)) to be equal to the column of the last pixel falling within data patch 22 (in this example pixel index: (0,2)), and then proceeds to scan the next row (row 1) from left to right until the last pixel falling within data patch 22 is reached (namely pixel index: (1, 2)). The data processing module then sets the border for row 1 (BorderIndex(1)) to be equal to the column of pixel index (1,2).

This process is repeated until a row is reached where the first scanned pixel for that row no longer falls within data patch 22, whereupon the data processing module determines that all of the pixels falling within patch 22 have been processed. At this point, the data processing module will have determined the border for block 22 to be as follows:
BorderIndex(0)=(2)
BorderIndex(1)=(2)
BorderIndex(2)=(3)
Borderlndex(3)=(4)
BorderIndex(4)=(3)
BorderIndex(5)=(1)
BorderIndex(6)=(0)
BorderIndex(7)=(0)
.
.
.

Once the border for data patch 22 has been determined, the data processing module adds all the pixels belonging to data patch 22 (i.e. all pixels in each row between the start position for that row and the determined BorderIndex) to a list, and then implements known algorithms to compute the grid coordinates of the corresponding height data points (not shown) closest to each of those pixels. The data processing module then sorts the list by the row value of the grid coordinates and processes the pixels row by row using known algorithms to apply topographical information (such as shading or isoclines, for example) to the pixels whose projection falls within the border of data patch 22 and to render the data patch for display. The topographical information to be applied is determined on the basis of the height of each of those pixels as calculated from the corresponding nearest height data points. In a particularly preferred arrangement this last step is spliced into several steps so as to avoid processing a large data list, but for simplicity we will consider that the data processing module processes all data relating to data patch 22 at one time.

This process is then repeated for all patches, but care must be taken to ensure that the patches are processed in the correct order. If the data processing module 490 were simply to continue processing at the first row where the BorderIndex indicates that no pixels belonging to data patch 22 were found, then pixels above the dotted line 8 in Fig. 9B would not be processed. In the context of Fig. 9A, if processing were to resume at row 6, then pixels (5,2), (5,3), (5,4) and (5,5) would not be processed.

As this is undesirable, the data processing module is configured to resume processing at row zero starting with the pixel adjacent the previously determined BorderIndex for that row, in other words at pixel index: (row *n*,(borderIndex(n) + 1)). For the example illustrated in Fig. 9A, processing of row zero resumes at pixel index: (0,3) and continues until the border between data patches 23 and 24 (Fig. 9B) is reached at which point BorderIndex(0) is set to the column number of the corresponding last pixel whose projection falls within data patch 23. Data Patch 32 is processed in a similar manner.

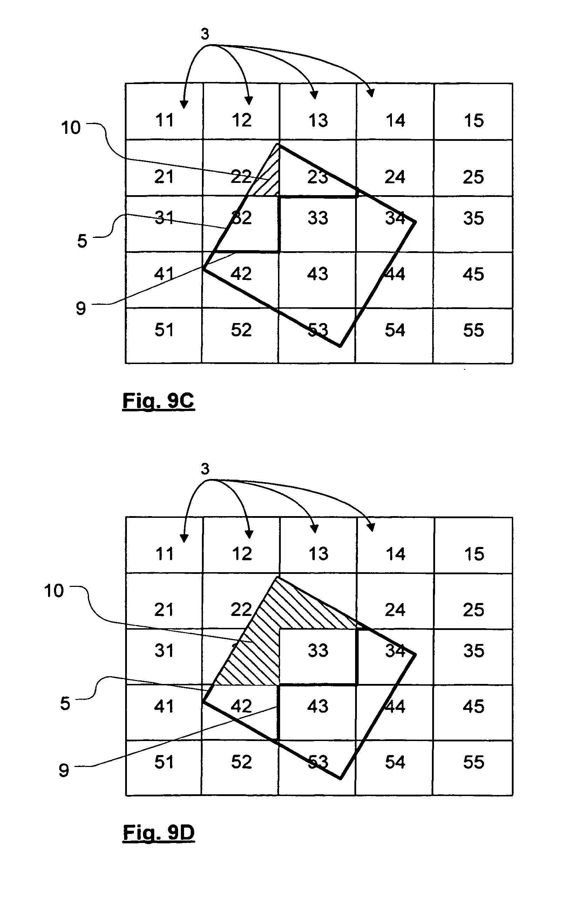

Once data patches 23 and 32 have been scanned, the border will be as depicted in Fig. 9C and all pixels not previously processed (i.e. all pixels between the border 9 and previously processed pixels (designated by the hatched region 10)) can now be processed in the manner previously described.

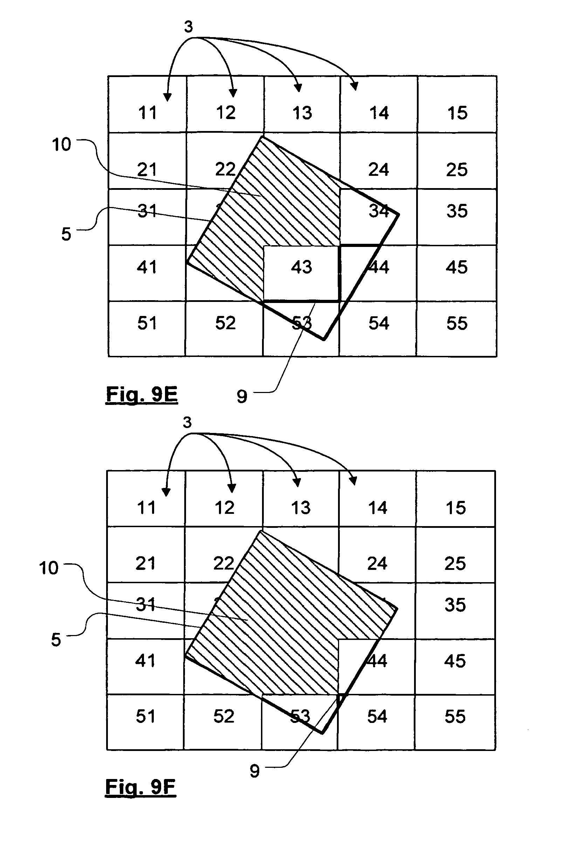

This process then repeats for data patches 24, 33 and 42, whereupon the border will be as depicted in Fig. 9D, and for patches 34, 43 and 52 (although in this example there will only be a few pixels from data patch 52 that need processing), whereupon the border will be as depicted in Fig. 9E.

When processing moves to consider patches 44 and 53, the BorderIndex for row zero has already reached the maximum column number for this field of view 5, and as such processing resumes at the first row where BorderIndex is not equal to the maximum column number for this field of view. Once data patches 44 and 53 have been processed the border will have been determined to be as is depicted schematically in Fig. 9F.

When data patches 44 and 52 have been processed, processing resumes at the first row of the last remaining data patch - data patch 54 - and when this patch has been processed, all pixels within the field of view 5 have been processed by the data processing module.

Once the process described above has been completed, the processor of the navigation device controls the display to display the rendered images for each data patch of the field of view.

As will be apparent from the foregoing, by virtue of the method described it has been possible to process all pixels of the field of view without having to revisit (and hence reload the data for) any previously processed data patches. The advantage of implementing pixel processing in this way is that avoiding reloading of data provides a performance improvement of such a magnitude that dynamic rendering of an image based on all of the available height information for the field of view (as opposed to merely a subset of that information) is now feasible. This is particularly the case when one considers that the height data will likely be compressed hence that each patch will probably have a header. By avoiding returning to any given patch it is possible to avoid having to reload these headers.

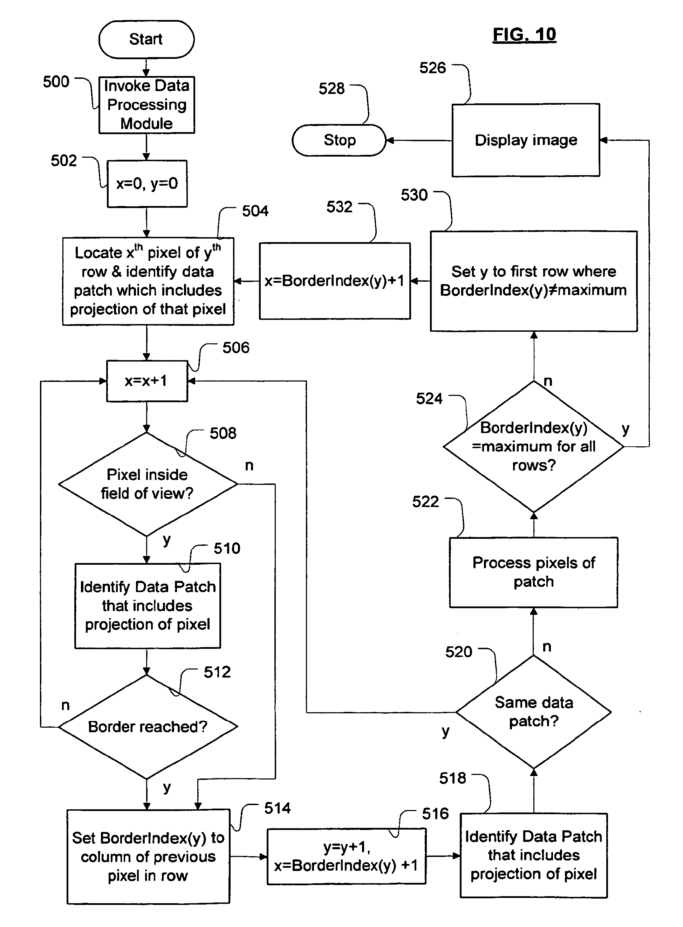

Referring now to Fig. 10 the steps of the foregoing method are depicted in a more conventional flow diagram format, and will now be described in detail.

Following initiation of the data processing method, the data processing module 490 is loaded into memory by the processor and executed in step 500. In step 502, the co-ordinates (x,y) for a start pixel of the field of view are set (in this instance the start pixel chosen is located at (0,0) - i.e. the pixel in the first column (x) of the first row (y)).

In step 504 the start pixel is located and the corresponding data patch which includes the projection of that pixel is identified. In step 506 the pixel in the next adjacent column is selected, and a check is made in step 508 to see whether this pixel is still within the field of view. If the pixel is not in the field of view, processing continues at step 514 described below. If the pixel is within the field of view, then the data patch in which the projection of that pixel lies is determined in step 510, and a check is made in step 512 to see whether a border has been reached by determining whether the identity of the data patch on which the pixel is projected has changed. If a border has not been reached, processing reverts to step 506 aforementioned.

If a border has been reached, then the BorderIndex for that row (y) is set to the column of the previous pixel in the data patch in step 514, and processing advances in step 516 to the next row (y+1) and the pixel adjacent the BorderIndex for that row. In step 518 the data patch that includes the projection of the pixel selected in step 516 is determined, and a check is made in step 520 whether the data patch identified in step 518 is the same data patch as that identified in step 510. If the patches are the same, processing of that patch has not completed and processing reverts to step 506.

If the patch identified in step 518 is different to the patch identified in step 510, then processing of the rows of that data patch is deemed to have been completed and in step 522 all pixels that are projected within the border (defined by BorderIndex(y) for the rows of that patch) are processed in the manner aforementioned, namely the grid coordinates of the corresponding height data points closest to each of those pixels are computed, topological information appropriate for each pixel is determined and the data patch is rendered for display.

In step 524, a check is made to determine whether all pixels in the field of view have been processed by determining whether BorderIndex(y) for each row y is equal to the maximum value. If all rows and pixels have been processed, then the rendered image is displayed in step 526 by displaying the invidual rendered images of each data patch, following which processing terminates in step 528.

If BorderIndex(y) is not equal to the maximum for all rows, then y is set in step 530 to the first row in which BorderIndex(y) is not equal to the maximum value for this field of view, and x is set in step 532 to the pixel adjacent the pixel identified by BorderIndex for that row y, whereupon processing reverts to step 504 aforementioned.

In very general terms the process implementing the teachings of the present invention may be defined as the steps of locating the border of a first data patch in which the projection of a first pixel lies, processing pixels of that patch, and repeatedly: (a) identifying the border of each unprocessed data patch that adjoins a previously processed data patch and (b) processing the pixels of that patch, until all data patches of the field of view have been processed.

It will be apparent from the foregoing that the particular embodiments of the invention that are herein described provide a method whereby the actual height data (and not a simplified subset of that data) is used to render an image that includes topographical information, and by virtue of this arrangement the accuracy and consistency of the height rendering process is preserved. A particular advantage of the preferred embodiment is that the overheads placed on a navigation device by the method are sufficiently low that the device can provide dynamic rendering of images - in particular images that include topographical information.

For example, whilst embodiments described in the foregoing detailed description refer to GPS, it should be noted that the navigation device may utilise any kind of position sensing technology as an alternative to (or indeed in addition to) GPS. For example the navigation device may utilise using other global navigation satellite systems such as the European Galileo system. Equally, it is not limited to satellite based but could readily function using ground based beacons or any other kind of system that enables the device to determine its geographic location.

In another modification it will be immediately apparent to persons skilled in the art that it would be eminently possible, without departing from the scope of the present invention, to: (i) implement column by column processing of data patches (rather than row by row processing of those patches), (ii) start processing from a pixel location other than (0,0), and/or (iii) to use the data processing method of the present invention for the processing of other types of data (such as vector data for example).

It will also be well understood by persons of ordinary skill in the art that whilst the preferred embodiment implements certain functionality by means of software, that functionality could equally be implemented solely in hardware (for example by means of one or more ASICs (application specific integrated circuit)) or indeed by a mix of hardware and software. As such, the scope of the present invention should not be interpreted as being limited only to being implemented in software.

A skilled person will also understand that whilst the teachings of the present invention have particular utility in circumstances where the field of view has been rotated with respect to the digital map, the method disclosed may also be utilised when the field of view is aligned with the digital map. As a consequence, the scope of the present invention should not be interpreted as being limited solely to circumstances where the field of view has been rotated with respect to the map.

## Claims

1. A data processing method for pixels (7) of a field of view (5), wherein the field of view comprises a portion of a digital map (1) that is to be displayed and includes a plurality of pixels (7), the digital map (1) comprises a plurality of data patches (3) which each include at least one data point, and the field of view (5) includes a plurality of said data patches (3), the method being **characterised by**:
(i) identifying (504), for a said pixel (7), a data patch (3) in which said pixel (7) lies;
(ii) locating (506-512) a border (9) of said data patch (3) that lies within said field of view (5);
(iii) processing (522) all pixels (7) of said field of view (5) that lie within said border (9) to provide a processed data patch;
(iv) locating (504-512), for each of any unprocessed data patches (3) within the field of view (5) that are adjacent a border (9) of a processed data patch, a border (9) of the unprocessed data patch (3) that lies within said field of view (5);
(v) processing (522), for each unprocessed data patch (3), all unprocessed pixels (7) that lie within the border of said unprocessed data patch (3) to thereby provide a processed data patch; and
(vi) repeating steps (iv) and (v) until all data patches (3) within said field of view have been processed (5).

2. A method according to Claim 1, wherein step (i) includes projecting said pixel (7) of said field of view (5) onto the data patches (3) of said digital map (1), and determining the identity of the data patch (3) in which said projection lies.

3. A method according to Claim 1 or 2, wherein step (ii) includes the step of processing pixels in the vicinity of the pixel of step (i) to determine the location of said border (9).

4. A method according to Claim 3, wherein processing a said pixel comprises determining the identity of the data patch in which a projection of said pixel on said digital map lies.

5. A method according to Claim 4, wherein a border is determined to occur when adjacent pixels are identified as being associated with different data patches.

6. A method according to Claim 5, wherein processing pixels in the vicinity of said pixel comprises an iterative process, starting at the pixel of step (i), in which pixels progressively more distant from the pixel of step (i) are processed until said border is located.

7. A method according to Claim 6, wherein said iterative process is configured either to process pixels
- progressively more distant from the pixel of step (i) in a given row or column of said field of view, or
- to process pixels of the row or column in which said pixel of step (i) lies to locate said border in that row or column, and then process rows or columns of said field of view progressively more distant from the row or column in which said pixel of step (i) lies to locate the border in each said row or column until all rows or columns which include pixels associated with the data patch with which said pixel of step (i) is associated have been identified.

8. A method according to Claim 7, wherein each said pixel is associated with a pixel index, part of which pixel index identifies the pixel's location in a row or column of said field of view, and locating said border for each said row or column includes setting a variable BorderIndex for that row or column to be equal to said part of the pixel index for a last of said pixels identified in said iterative process to be associated with the data patch with which said pixel of step (i) is associated.

9. A method according to Claim 8, wherein said pixel index includes a first part identifying the row of said field of view in which said pixel is located, and a second part identifying the column of said field of view in which said pixel is located.

10. A method according to Claim 9, wherein said iterative process is configured to process pixels at least one of (A) row by row, and the variable BorderIndex for each row is set to the second part of the pixel index for the last of said pixels identified in said iterative process to be associated with the data patch with which said pixel of step (i) is associated and (B) column by column, and the variable BorderIndex for each column is set to the first part of the pixel index for the last of said pixels identified in said iterative process to be associated with the data patch with which said pixel of step (i) is associated.

11. A method according to any preceding claim, wherein each pixel of said field of view has a pixel index, and step (iv) comprises, for each unprocessed data patch, the step of determining a first pixel of that patch that is to be processed to be a pixel adjacent a pixel of a previously processed data patch that has a pixel index equal to a variable BorderIndex and a row or column with which said variable BorderIndex is associated, said step (iv) optionally including the step of processing pixels in the vicinity of said first pixel to determine the location of said border (9).

12. A method according to Claim 11, wherein said determining step includes the step of selecting a first pixel of each unprocessed data patch to be a pixel in the first row or column of said processed patch for whom the variable BorderIndex is not equal to a maximum value.

13. A method according to any preceding claim, wherein step (iii) or (iv) comprises the step of identifying, for each said pixel associated with a given data patch, at least one data point of said data patch that is closest to a projection of said pixel on said digital map.

14. A method according to Claim 13, wherein said at least one data point comprises information pertaining to the elevation of a geographic location within said digital map.

15. A method according to Claim 14, comprising the step of computing a value for each said pixel that is dependent on the value of said at least one closest data point.

16. A method according to Claim 15, wherein each said data patch includes a plurality of data points, and said computing step comprises computing a value for each said pixel that is dependent on the values of those data points in the vicinity of each said pixel.

17. A method according to Claim 16, wherein said computing step comprises computing a value for each said pixel that is dependent on the values of those data points immediately surrounding each said pixel.

18. A method according to any of Claims 18 to 17, wherein said value conveys topographical information for each said pixel, said topographical information optionally including a shading coefficient.

19. A method according to any of Claims 13 to 18, comprising the step of rendering an image for that data patch with which said pixels are associated, and then generating a final image for display, said final image comprising an assembly of the images rendered for each said data patch arranged in accordance with the corresponding location of said data patches in said field of view.

20. A method according to any preceding claim, wherein said field of view includes at least a portion of a determined route between geographic start position and destination positions.

21. A method according to any preceding claim, wherein said field of view includes a current position of a navigation device, said field of view optionally being centred on said current position.

22. A data processing device adapted to perform the methods of any of the preceding claims, and including at least a processor and storage containing at least a digital map.

23. A device according to Claim 22 embodied as a navigation device (200), said device further comprising: a display (240) controllable by said processor (210); an antenna (250); and a receiver (250) for receiving data signals via said antenna, wherein said processor (210) is configured to determine from said received data signals a current location of said navigation device (200), to generate a final image of the field of view that includes said current location and the images rendered for said data patches, and to control said display to display said final image, and said processor (210) is configured to periodically repeat the determination of said current position and to invoke said data processing module for the generation of a new final image if a determined location for said navigation device (200) should differ from said previously determined current position.

24. Computer software comprising one or more software modules operable, when executed in an execution environment, to cause a processor (210) to:
(i) identify (504), for a pixel (7) of a field of view that comprises a portion of a digital map that is to be displayed, a data patch (3) in which said pixel (7) lies, wherein the digital map comprises a plurality of data patches which each include at least one data point and said field of view comprises a plurality of said pixel;
(ii) locate a border (9) of said data patch (3) that lies within said field of view (5);
(iii) process all pixels (7) of said field of view (5) that lie within said border (9) to provide a processed data patch;
(iv) locate, for each of any unprocessed data patches (3) within the field of view (5) that are adjacent a border (9) of a processed data patch, a border (9) of the unprocessed data patch (3) that lies within said field of view (5);
(v) process, for each unprocessed data patch (3), all unprocessed pixels (7) that lie within the border of said unprocessed data patch (3) to thereby provide a processed data patch; and
(vi) repeat steps (iv) and (v) until all data patches (3) within said field of view have been processed (5).

## Patentansprüche

1. Datenverarbeitungsverfahren für Pixel (7) eines Blickfeldes (5), wobei das Blickfeld einen Teil einer digitalen Abbildung (1) umfasst, die angezeigt werden soll und die mehrere Pixel (7) beinhaltet, wobei die digitale Abbildung (1) mehrere Daten-Patches (3) umfasst, die jeweils wenigstens einen Datenpunkt beinhalten, und das Blickfeld (5) mehrere der genannten Daten-Patches (3) beinhaltet, wobei das Verfahren **gekennzeichnet ist durch**:
(i) Identifizieren (504), für ein genanntes Pixel (7), eines Daten-Patches (3), in dem das genannte Pixel (7) liegt;
(ii) Suchen (506-512) einer Begrenzung (9) des genannten Daten-Patches (3), die innerhalb des genannten Blickfeldes (5) liegt;
(iii) Verarbeiten (522) aller innerhalb der genannten Begrenzung (9) liegenden Pixel (7) des genannten Blickfeldes (5), um einen verarbeiteten Daten-Patch bereitzustellen;
(iv) Suchen (504-512), für jeden von eventuellen unverarbeiteten Daten-Patches (3) innerhalb des Blickfeldes (5), die neben einer Begrenzung (9) eines verarbeiteten Daten-Patch liegen, einer innerhalb des genannten Blickfeldes (5) liegenden Begrenzung (9) des unverarbeiteten Daten-Patch (3);
(v) Verarbeiten (522) für jeden unverarbeiteten Daten-Patch (3) aller innerhalb der Begrenzung des genannten unverarbeiteten Daten-Patch (3) liegenden unverarbeiteten Pixel (7), um **dadurch** einen verarbeiteten Daten-Patch bereitzustellen; und
(vi) Wiederholen der Schritte (iv) und (v), bis alle Daten-Patches (3) innerhalb des genannten Blickfeldes verarbeitet sind (5).

2. Verfahren nach Anspruch 1, wobei Schritt (i) das Projizieren des genannten Pixels (7) des genannten Blickfeldes (5) auf die genannten Daten-Patches (3) der genannten digitalen Abbildung (1) und das Ermitteln der Identität des Daten-Patches (3) beinhaltet, in dem die genannte Projektion liegt.

3. Verfahren nach Anspruch 1 oder 2, wobei Schritt (ii) den Schritt des Verarbeitens von Pixeln in der Nähe des Pixels von Schritt (i) beinhaltet, um den Ort der genannten Begrenzung (9) zu ermitteln.

4. Verfahren nach Anspruch 3, wobei das Verarbeiten des genannten Pixels das Ermitteln der Identität des Daten-Patches beinhaltet, in dem eine Projektion des genannten Pixels auf der genannten digitalen Abbildung liegt.

5. Verfahren nach Anspruch 4, wobei eine Begrenzung dann als vorhanden festgestellt wird, wenn benachbarte Pixel als mit unterschiedlichen Daten-Patches assoziiert identifiziert werden.

6. Verfahren nach Anspruch 5, wobei das Verarbeiten von Pixeln in der Nähe des genannten Pixels einen iterativen Prozess beinhaltet, beginnend mit dem Pixel von Schritt (i), in dem Pixel, die progressiv weiter von dem Pixel von Schritt (i) entfernt sind, so lange bearbeitet werden, bis die genannte Begrenzung gefunden ist.

7. Verfahren nach Anspruch 6, wobei der genannte iterative Prozess so konfiguriert ist, dass er entweder
- Pixel verarbeitet, die progressiv weiter vom Pixel von Schritt (i) in einer bestimmten Reihe oder Spalte des genannten Blickfeldes liegen, oder
- Pixel der Reihe oder Spalte verarbeitet, in der das genannte Pixel von Schritt (i) so liegt, um die genannte Begrenzung in dieser Reihe oder Spalte zu finden, und dann Reihen oder Spalten des genannten Blickfeldes verarbeitet, die progressiv weiter von der Reihe oder Spalte entfernt sind, in der das genannte Pixel von Schritt (i) liegt, um die Begrenzung in jeder genannten Reihe oder Spalte zu finden, bis alle Reihen oder Spalten identifiziert wurden, die Pixel enthalten, die mit dem Daten-Patch assoziiert sind, mit dem das genannte Pixel von Schritt (i) assoziiert ist.

8. Verfahren nach Anspruch 7, wobei jedes genannte Pixel mit einem Pixelindex assoziiert ist, von dem ein Teil den Ort des Pixels in einer Reihe oder Spalte des genannten Blickfeldes identifiziert, und das Finden der genannten Begrenzung für jede genannte Reihe oder Spalte das Setzen einer Variablen BorderIndex für diese Reihe oder Spalte beinhaltet, so dass sie gleich dem genannten Teil des Pixelindexes für ein Letztes der genannten Pixel ist, die in dem genannten iterativen Prozess identifiziert wurden, der mit dem Daten-Patch assoziiert werden soll, mit dem das genannte Pixel von Schritt (i) assoziiert ist.

9. Verfahren nach Anspruch 8, wobei der genannte Pixelindex einen ersten Teil, der die Reihe des genannten Blickfeldes identifiziert, in dem sich das genannte Pixel befindet, und einen zweiten Teil beinhaltet, der die Spalte des genannten Blickfeldes identifiziert, in dem sich das genannte Pixel befindet.

10. Verfahren nach Anspruch 9, wobei der genannte iterative Prozess so konfiguriert ist, dass er Pixel (A) Reihe für Reihe verarbeitet, und die Variable BorderIndex für jede Reihe auf den zweiten Teil des Pixelindex für das Letzte der genannten Pixel gesetzt wird, die in dem genannten iterativen Prozess identifiziert werden, der mit dem Daten-Patch assoziiert werden soll, mit dem das genannte Pixel von Schritt (i) assoziiert ist, und/oder (B) Spalte für Spalte verarbeitet, und die Variable BorderIndex für jede Spalte auf den ersten Teil des Pixelindex für das Letzte der genannten Pixel gesetzt wird, die in dem genannten iterativen Prozess identifiziert werden, der mit dem Daten-Patch assoziiert werden soll, mit dem das genannte Pixel von Schritt (i) assoziiert ist.

11. Verfahren nach einem der vorherigen Ansprüche, wobei jedes Pixel des genannten Blickfeldes einen Pixelindex hat, und Schritt (iv) für jeden unverarbeiteten Daten-Patch den Schritt des Ermittelns eines ersten Pixels dieses Patches, der verarbeitet werden soll, als ein Pixel neben einem Pixel eines zuvor verarbeiteten Daten-Patches, der einen Pixelindex hat, der gleich einer Variablen BorderIndex ist, und einer Reihe oder Spalte, mit der die genannte Variable BorderIndex assoziiert ist, beinhaltet, wobei der genannte Schritt (iv) bei Bedarf den Schritt des Verarbeitens von Pixeln in der Nähe des genannten ersten Pixels beinhaltet, um den Ort der genannten Begrenzung (9) zu ermitteln.

12. Verfahren nach Anspruch 11, wobei der genannte Ermittlungsschritt den Schritt des Auswählens eines ersten Pixels jedes unverarbeiteten Daten-Patches als ein Pixel in der ersten Reihe oder Spalte des genannten verarbeiteten Patches beinhaltet, für den die Variable BorderIndex nicht gleich einem maximalen Wert ist.

13. Verfahren nach einem der vorherigen Ansprüche, wobei Schritt (iii) oder (iv) den Schritt des Identifierens, für jedes genannte Pixel, das mit einem gegebenen Daten-Patch assoziiert ist, von wenigstens einem Datenpunkt des genannten Daten-Patches beinhaltet, der einer Projektion des genannten Pixels auf der genannten digitalen Abbildung am nächsten liegt.

14. Verfahren nach Anspruch 13, wobei der genannte wenigstens eine Datenpunkt Informationen beinhaltet, die sich auf die Höhe eines geografischen Ortes innerhalb der genannten digitalen Abbildung bezieht.

15. Verfahren nach Anspruch 14, das den Schritt des Berechnens eines Wertes für jedes genannte Pixel beinhaltet, das vom Wert des genannten wenigstens einen nächstliegenden Datenpunktes abhängig ist.

16. Verfahren nach Anspruch 15, wobei jeder genannte Daten-Patch mehrere Datenpunkte beinhaltet und der genannte Rechenschritt das Berechnen eines Wertes für jedes genannte Pixel beinhaltet, das von den Werten dieser Datenpunkte in der Nähe jedes genannten Pixels abhängig ist.

17. Verfahren nach Anspruch 16, wobei der genannte Rechenschritt das Berechnen eines Wertes für jedes genannte Pixel beinhaltet, das von den Werten dieser Datenpunkte unmittelbar um jedes genannte Pixel herum abhängig ist.

18. Verfahren nach einem der Ansprüche 18 bis 17 [sic], wobei der genannte Wert topografische Informationen für jedes genannte Pixel überträgt, wobei die genannten topografischen Informationen bei Bedarf einen Schattierungskoeffizienten beinhalten.

19. Verfahren nach einem der Ansprüche 13 bis 18, das den Schritt des Renderns eines Bildes für diesen Daten-Patch, mit dem die genannten Pixel assoziiert sind, und dann das Erzeugen eines Endbildes zur Anzeige beinhaltet, wobei das genannte Endbild eine Gruppe der Bilder beinhaltet, die für jeden genannten Daten-Patch gerendert wurden, der gemäß dem entsprechenden Ort der genannten Daten-Patches in dem genannten Blickfeld angeordnet ist.

20. Verfahren nach einem der vorherigen Ansprüche, wobei das genannte Blickfeld wenigstens einen Abschnitt einer vorbestimmten Route zwischen einer geografischen Startposition und Zielposition beinhaltet.

21. Verfahren nach einem der vorherigen Ansprüche, wobei das genannte Blickfeld eine aktuelle Position eines Navigationsgerätes beinhaltet, wobei das genannte Blickfeld bei Bedarf auf der genannten aktuellen Position zentriert ist.

22. Datenverarbeitungsgerät zum Ausführen der Verfahren nach einem der vorherigen Ansprüche und mit wenigstens einem Prozessor und einem Speicher, der wenigstens eine digitale Abbildung enthält.

23. Gerät nach Anspruch 22, das als Navigationsgerät (200) ausgestaltet ist, wobei das genannte Gerät ferner Folgendes umfasst: ein Display (240), das von dem genannten Prozessor (210) gesteuert werden kann; eine Antenne (250); und einen Empfänger (250) zum Empfangen von Datensignalen über die genannte Antenne, wobei der genannte Prozessor (210) so konfiguriert ist, dass er von den genannten empfangenen Datensignalen einen aktuellen Ort des genannten Navigationsgeräts (200) ermittelt, um ein Endbild des Blickfeldes zu erzeugen, das den genannten aktuellen Ort und die für die genannten Daten-Patches gerenderten Bilder beinhaltet, und um das genannte Display zum Anzeigen des genannten Endbildes zu steuern, und wobei der genannte Prozessor (210) so konfiguriert ist, dass er die Ermittlung der genannten aktuellen Position periodisch wiederholt und das genannte Datenverarbeitungsmodul für die Erzeugung eines neuen Endbildes aufruft, wenn sich ein ermittelter Ort für das genannte Navigationsgerät (200) von der genannten zuvor ermittelten aktuellen Position unterscheidet.

24. Computersoftware, die ein oder mehrere Software-Module umfasst, die bei Ausführung in einer Ausführungsumgebung bewirkt/bewirken, dass ein Prozessor (210) Folgendes ausführt:
(i) Identifizieren (504), für ein Pixel (7) eines Blickfeldes, das einen Teil einer digitalen Abbildung umfasst, die angezeigt werden soll, eines Daten-Patches (3), in dem das genannte Pixel (7) liegt, wobei die digitale Abbildung mehrere Daten-Patches umfasst, die jeweils wenigstens einen Datenpunkt beinhalten, und das genannte Blickfeld mehrere der genannten Pixel umfasst;
(ii) Suchen einer Begrenzung (9) des genannten Daten-Patches (3), die innerhalb des genannten Blickfeldes (5) liegt;
(iii) Verarbeiten aller Pixel (7) des genannten innerhalb der genannten Begrenzung (9) liegenden Blickfeldes (5), um einen verarbeiteten Daten-Patch bereitzustellen;
(iv) Suchen, für jeden von eventuellen unverarbeiteten Daten-Patches (3) innerhalb des Blickfeldes (5), die neben einer Begrenzung (9) eines verarbeiteten Daten-Patch liegen, einer Begrenzung (9) des unverarbeiteten Daten-Patches (3), die innerhalb des genannten Blickfeldes (5) liegt;
(v) Verarbeiten für jeden unverarbeiteten Daten-Patch (3) aller innerhalb der Begrenzung des genannten unverarbeiteten Daten-Patches (3) liegenden unverarbeiteten Pixel (7), um **dadurch** einen verarbeiteten Daten-Patch bereitzustellen; und
(vi) Wiederholen der Schritte (iv) und (v), bis alle Daten-Patches (3) innerhalb des genannten Blickfeldes verarbeitet sind (5).

## Revendications

1. Procédé de traitement de données pour des pixels (7) d'un champ de vision (5), le champ de vision comprenant une partie d'une carte numérique (1) destinée à être affichée et comportant une pluralité de pixels (7), la carte numérique (1) comportant une pluralité de patchs de données (3) dont chacun contient au moins un point de données, et le champ de vision (5) incluant une pluralité desdits patchs de données (3), le procédé étant **caractérisé par** les opérations consistant à :
(i) identifier (504), pour ledit pixel (7), un patch de données (3) dans lequel se situe ledit pixel (7) ;
(ii) localiser (506-512) un bord (9) dudit patch de données (3) qui se trouve dans les limites dudit champ de vision (5) ;
(iii) traiter (522) tous les pixels (7) dudit champ de vision (5) qui se trouvent dans les limites dudit bord (9) afin d'obtenir un patch de données traité ;
(iv) pour chaque patch des quelconques patchs de données non traités (3) dans le champ de vision (5) qui sont adjacents à un bord (9) d'un patch de données traité, localiser (504-512) un bord (9) du patch de données non traité (3) qui se trouve dans les limites dudit champ de vision (5) ;
(v) pour chaque patch de données non traité (3), traiter (522) tous les pixels non traités (7) qui se trouvent dans les limites du bord dudit patch de données non traité (3), afin d'obtenir ainsi un patch de données traité ; et
(vi) répéter les étapes (iv) et (v) jusqu'à ce que tous les patchs de données (3) se trouvant dans les limites dudit champ de vision aient été traités (5).

2. Procédé selon la revendication 1, l'étape (i) englobant les opérations consistant à faire la projection dudit pixel (7) dudit champ de vision (5) sur les patchs de données (3) de ladite carte numérique (1), et à déterminer l'identité du patch de données (3) dans lequel se trouve ladite projection.

3. Procédé selon la revendication 1 ou 2, l'étape (ii) englobant l'étape consistant à traiter les pixels dans le voisinage du pixel de l'étape (i) afin de déterminer l'emplacement dudit bord (9).

4. Procédé selon la revendication 3, le traitement dudit pixel comprenant la détermination de l'identité du patch de données dans lequel se trouve une projection dudit pixel sur ladite carte numérique.

5. Procédé selon la revendication 4, un bord étant déterminé à survenir lorsque des pixels adjacents sont identifiés comme étant associés à des patchs de données différents.

6. Procédé selon la revendication 5, le traitement des pixels dans le voisinage dudit pixel comprenant un processus itératif, qui commence au niveau du pixel de l'étape (i), dans lequel des pixels progressivement plus distants du pixel de l'étape (i) font l'objet d'un traitement jusqu'à ce que ledit bord soit localisé.

7. Procédé selon la revendication 6, ledit processus itératif étant configuré de manière à traiter des pixels de deux manières, soit
- progressivement plus distants par rapport au pixel de l'étape (i) dans une rangée ou une colonne spécifique dudit champ de vision,
soit
- traiter les pixels de la rangée ou de la colonne dans laquelle se trouve ledit pixel de l'étape (i) afin de localiser ledit bord dans cette rangée ou colonne, et ensuite traiter les rangées ou les colonnes dudit champ de vision progressivement plus distantes de la rangée ou colonne dans laquelle se trouve ledit pixel de l'étape (i) afin de localiser le bord dans chaque rangée ou colonne jusqu'à ce que toutes les rangées ou colonnes qui contiennent des pixels associés au patch de données auquel ledit pixel de l'étape (i) est associé, aient été identifiées.

8. Procédé selon la revendication 7, chacun desdits pixels étant associé à un indice de pixel, indice de pixel dont une partie identifie l'emplacement du pixel dans une rangée ou une colonne dudit champ de vision, et la localisation dudit bord pour chacune desdites rangées ou colonnes incluant la configuration d'un paramètre BorderIndex variable pour cette rangée ou colonne pour qu'il soit égal à ladite partie de l'indice de pixel pour le dernier desdits pixels ayant été identifié lors dudit processus itératif destiné à être associé au patch de données auquel ledit pixel de l'étape (i) est associé.

9. Procédé selon la revendication 8, ledit indice de pixel englobant une première partie laquelle identifie la rangée dudit champ de vision dans lequel ledit pixel est localisé, et une deuxième partie laquelle identifie la colonne dudit champ de vision dans lequel ledit pixel est localisé.

10. Procédé selon la revendication 9, ledit processus itératif étant configuré de manière à traiter des pixels suivant l'un des modes suivants à savoir (A) rangée par rangée, et le paramètre BorderIndex variable pour chaque rangée est réglé sur la deuxième partie de l'indice de pixel pour le dernier desdits pixels ayant été identifié lors dudit processus itératif pour être associé au patch de données auquel ledit pixel de l'étape (i) est associé, et (B) colonne par colonne, et le paramètre BorderIndex variable pour chaque colonne est réglé sur la première partie de l'indice de pixel pour le dernier desdits pixels ayant été identifié lors dudit processus itératif pour être associé au patch de données auquel ledit pixel de l'étape (i) est associé.

11. Procédé selon l'une quelconque des revendications précédentes, chaque pixel dudit champ de vision possédant un indice de pixel, et l'étape (iv) comprenant, pour chaque patch de données non traité, l'étape consistant à déterminer un premier pixel pour ce patch précis destiné à être traité comme étant un pixel adjacent à un pixel d'un patch de données traité précédemment dont l'indice de pixel est égal à un paramètre BorderIndex variable, et une rangée ou une colonne à laquelle ledit paramètre BorderIndex variable est associé, ladite étape (iv) englobant facultativement l'étape consistant à traiter des pixels dans le voisinage dudit premier pixel afin de déterminer l'emplacement dudit bord (9).

12. Procédé selon la revendication 11, ladite étape de détermination englobant l'étape de sélection d'un premier pixel de chaque patch de données non traité pour qu'il soit un pixel dans la première rangée ou colonne dudit patch de données traité pour lequel le paramètre BorderIndex variable n'est pas égal à une valeur maximale.

13. Procédé selon l'une quelconque des revendications précédentes, l'étape (iii) ou (iv) comprenant l'étape consistant à identifier, pour chacun desdits pixels associé à un patch de données spécifique, au moins un point de données dudit patch de données qui se rapproche le plus d'une projection dudit pixel sur ladite carte numérique.

14. Procédé selon la revendication 13, ledit au moins un point de données comprenant des informations relatives à l'élévation d'un emplacement géographique dans ladite carte numérique.

15. Procédé selon la revendication 14, comprenant l'étape consistant à calculer une valeur pour chacun desdits pixels qui est subordonné à la valeur dudit au moins un point de données le plus proche.

16. Procédé selon la revendication 15, chacun desdits patchs de données englobant une pluralité de points de données, et ladite étape de calcul comprenant l'opération consistant à calculer une valeur pour chacun desdits pixels qui est subordonné aux valeurs de ces points de données se trouvant dans le voisinage de chacun desdits pixels.

17. Procédé selon la revendication 16, ladite étape de calcul comprenant l'opération consistant à calculer une valeur pour chacun desdits pixels qui est subordonné aux valeurs de ces points de données qui entourent à proximité immédiate chacun desdits pixels.

18. Procédé selon l'une quelconque des revendications 18 [sic] à 17, ladite valeur communiquant des informations topographiques pour chacun desdits pixels, lesdites informations topographiques englobant facultativement un coefficient d'ombrage.

19. Procédé selon l'une quelconque des revendications 13 à 18, comprenant l'étape consistant à rendre une image pour le patch de données précis auquel lesdits pixels sont associés, et ensuite à générer une image définitive à des fins d'affichage, ladite image définitive comprenant un montage des images rendues pour chacun desdits patchs de données agencés en conformité avec l'emplacement correspondant desdits patchs de données dans ledit champ de vision.

20. Procédé selon l'une quelconque des revendications précédentes, ledit champ de vision englobant au moins une partie d'un itinéraire déterminé entre une position de départ et des positions de destination géographiques.

21. Procédé selon l'une quelconque des revendications précédentes, ledit champ de vision englobant une position actuelle d'un dispositif de navigation, ledit champ de vision étant facultativement centré sur ladite position actuelle.

22. Dispositif de traitement de données conçu pour réaliser les procédés énoncés dans l'une quelconque des revendications précédentes, et englobant au moins un processeur et une mémoire de stockage contenant au moins une carte numérique.

23. Dispositif selon la revendication 22, concrétisé sous la forme d'un dispositif de navigation (200), ledit dispositif comprenant en outre les postes suivants : un afficheur (240) pilotable par ledit processeur (210) ; une antenne (250) ; et un récepteur (250) pour recevoir des signaux de données via ladite antenne, cas dans lequel ledit processeur (210) est configuré de manière à déterminer, à partir desdits signaux de données reçus, un emplacement actuel dudit dispositif de navigation (200), à générer un image définitive du champ de vision qui inclut ladite position actuelle et les images rendues pour lesdits patchs de données, et à piloter ledit afficheur pour afficher ladite image définitive, et ledit processeur (210) étant configuré de manière à répéter périodiquement la détermination de ladite position actuelle et à solliciter ledit module de traitement de données en vue de la génération d'une nouvelle image définitive au cas où un emplacement déterminé pour ledit dispositif de navigation (200) serait différent de ladite position actuelle ayant été déterminée précédemment.

24. Logiciel informatique, comprenant un ou plusieurs modules logiciels, apte à fonctionner de manière à obliger un processeur (210) à réaliser les opérations suivantes lorsqu'il est exécuté dans un environnement d'exécution :
(i) identifier (504), pour un pixel (7) d'un champ de vision qui comporte une partie d'une carte numérique destinée à être affichée, un patch de données (3) dans lequel se situe ledit pixel (7), cas dans lequel la carte numérique comporte une pluralité de patchs de données dont chacun englobe au moins un point de données et ledit champ de vision comprend une pluralité desdits pixels ;
(ii) localiser un bord (9) dudit patch de données (3) qui se trouve dans les limites dudit champ de vision (5) ;
(iii) traiter tous les pixels (7) dudit champ de vision (5) qui se trouvent dans les limites dudit bord (9) afin d'obtenir un patch de données traité ;
(iv) pour chaque patch des quelconques patchs de données non traités (3) dans le champ de vision (5) qui sont adjacents à un bord (9) d'un patch de données traité, localiser un bord (9) du patch de données non traité (3) qui se trouve dans les limites dudit champ de vision (5) ;
(v) pour chaque patch de données non traité (3), traiter tous les pixels non traités (7) qui se trouvent dans les limites du bord dudit patch de données non traité (3), afin d'obtenir ainsi un patch de données traité ; et
(vi) répéter les étapes (iv) et (v) jusqu'à ce que tous les patchs de données (3) se trouvant dans les limites dudit champ de vision aient été traités (5).
